# EUROPÄISCHE PATENTSCHRIFT

(11) **EP 3 683 359 B1**
(45) Veröffentlichungstag und Bekanntmachung des Hinweises auf die Patenterteilung: **23.12.2020**
(21) Anmeldenummer: 19216993.6
(22) Anmeldetag: 17.12.2019
(51) Int. Cl.: E01C 23/09, B29C 48/40

(54) **MOBILE VORRICHTUNG ZUM HERSTELLEN FUGENFÖRMIGER NÄHTE AN TEILFLÄCHEN VON ASPHALTDECKSCHICHTEN**
MOBILE DEVICE FOR PRODUCING JOINT-SHAPED SEAMS ON PARTIAL SURFACES OF ASPHALT COVERINGS
DISPOSITIF MOBILE PERMETTANT DE PRODUIRE DE JONCTIONS EN FORME DE JOINTS SUR DES SURFACES PARTIELLES DES COUCHES DE ROULEMENT ASPHALTÉES

(30) Priorität: 27.12.2018 DE 102018133615
(43) Veröffentlichungstag der Anmeldung: 22.07.2020
(73) Patentinhaber: DENSO-Holding GmbH & Co., 51371 Leverkusen (DE)
(72) Erfinder:
(74) Vertreter: Geskes, Christoph

(56) Entgegenhaltungen:
- EP-B1- 0 646 675
- WO-A1-2005/070225
- CN-A- 107 471 594
- KR-B1- 101 309 975
- US-A1- 2016 075 877

## Beschreibung

Die Erfindung betrifft eine mobile Vorrichtung zum Herstellen fugenförmiger Nähte an Teilflächen von Asphaltdeckschichten durch Plastifizieren und Ausbringen eines bandförmigen bitumenhaltigen Materials entlang einer Nahtflanke einer Teilfläche, eine Verwendung einer mobilen Vorrichtung zum Herstellen fugenförmiger Nähte, und ein Verfahren zum Herstellen fugenförmiger Nähte an Teilflächen von Asphaltdeckschichten mit einer solchen Vorrichtung.

Soweit in der vorliegenden Erfindung der Begriff "Naht" bzw. "Nähte" verwendet wird, ist hierunter ein Oberbegriff sowohl für Nähte als auch für Anschlüsse zu verstehen. Nähte im eigentlichen Sinne entstehen durch den Verbund von nebeneinanderliegenden Einbaubahnen aus Mischgut mit vergleichbaren Eigenschaften. Anschlüsse sind die Verbindungen von Einbaubahnen aus Mischgut mit unterschiedlichen Eigenschaften. Dazu gehören u.a. Walzasphalt (Asphaltbeton, Splittmastixasphalt) an Gussasphalt und umgekehrt. Die Verbindung von Gussasphalt an Gussasphalt ist ebenfalls als Anschluss herzustellen.

Aus der EP 0 646 675 B1 ist ein Verfahren und eine Vorrichtung zum Herstellen fugenförmiger Nähte an Teilflächen von Asphaltdecken bekannt. Die Vorrichtung umfasst einen Aufnahmetrichter, einer Kneteinrichtung und eine Formdüse. In der Kneteinrichtung sind zwei Knetschnecken angeordnet, die ein zu verarbeitendes bitumenhaltiges Material über den Aufnahmetrichter erfassen und durch Rotation in Richtung der Formdüse befördert.

Nachteil der aus dem Stand der Technik bekannten Vorrichtungen ist, dass während einer Rotation einer Knetschnecke ein bitumenhaltiges Material pulsierend und somit schubartig und/oder gaseinschlussversetzt aus einer Formdüse austritt. Insbesondere verflüchtigt sich das eingeschlossene Gas erst nach Austritt aus der Formdüse. Das austretende Band bestehend aus bitumenhaltigem Material weist dann eine ungleichmäßige Form, Abschnitte mit zu viel oder zu wenig Material oder gar Fehlstellen auf.

Aufgabe der Erfindung ist es, ein bitumenhaltiges Material mit einer mobilen Vorrichtung zu Plastifizieren und zu Homogenisieren, wobei Gaseinschlüsse im Material und eine Pulsation im Massestrom des Materials zumindest vermindert werden, um das Material verbessert auszubringen.

Die Aufgabe wird erfindungsgemäß gelöst mittels einer mobilen Vorrichtung zum Herstellen fugenförmiger Nähte an Teilflächen von Asphaltdeckschichten durch Plastifizieren und Ausbringen eines bandförmigen bitumenhaltigen Materials entlang einer Nahtflanke einer Teilfläche, mindestens umfassend eine Zugabeeinheit, ein Extrudergehäuse und eine dem Extrudergehäuse nachgeordnete Austrageeinheit, wobei im Extrudergehäuse ein Doppelschneckenextruder angeordnet ist, der einen ersten Schneckenextruder und einen zweiten Schneckenextruder mit in etwa parallel zu einander verlaufenden Extruderachsen, einer ersten Welle und einer zweiten Welle umfasst, wobei der erste Schneckenextruder eine erste Helix auf der ersten Welle aufweist und der zweite Schneckenextruder eine zweite Helix auf der zweiten Welle aufweist, und die erste Helix und die zweite Helix kämmend ineinandergreifend ausgebildet sind, und wobei der erste Schneckenextruder und der zweite Schneckenextruder jeweils einen Kanal aufweisen, die einen Raum zwischen den jeweiligen Windungen der ersten und der zweiten Helix bilden, wobei die Kanäle eine Kanalbreite aufweisen, die sich ausgehend von einer Einzugszone, über eine Kompressionszone bis zu einer Ausstoßzone des Doppelschneckenextruders in ihrer Breite verringern, und die jeweiligen Kanäle in einer Kanalhöhe ausgehend von der Einzugszone, über die Kompressionszone bis zur Ausstoßzone abnehmen, wobei das zu verarbeitende bitumenhaltige Material mindestens Bitumen umfasst und über die Zugabeeinheit in einen Zugabebereich, der durch die Einzugszone des Doppelschneckenextruders gebildet ist, zuführbar ist.

Wird im Rahmen der Erfindung der Begriff "etwa" im Zusammenhang mit Werten oder Wertebereichen verwendet, so ist darunter ein Toleranzbereich zu verstehen, den der Fachmann auf diesem Gebiet für üblich erachtet. Insbesondere ist ein Toleranzbereich von ±20 %, bevorzugt von ±10 % und weiter bevorzugt von ±5 % vorgesehen. Soweit verschiedene Bereiche für Mengenangaben in Bezug auf Bauteile, Bestandteile und Definitionen, insbesondere des bitumenhaltigen Materials, aber zum Beispiel auch Ausgestaltungen der Helices, in der vorliegenden Erfindung angegeben sind, sind die Untergrenzen und die Obergrenzen der verschiedenen Bereiche in Bezug auf den jeweiligen Bestandteil und die jeweilige Definition miteinander kombinierbar.

Soweit in der vorliegenden Erfindung der Begriff "bitumenhaltiges Material" oder "Material" verwendet wird, ist hierunter eine Mehrzahl von Rohstoffen mit unterschiedlichen Eigenschaften zu verstehen. Vorteilhafterweise umfasst das bitumenhaltige Material neben Bitumen vorzugweise mindestens einen Weichmacher, mindestens einen mineralischen Füllstoff und/oder mindestens ein Polymer. In einer vorteilhaften Ausführungsform sind die Materialien neben mindestens einem Bitumen ausgewählt aus einer Gruppe umfassend anorganische, pulverförmige Füllstoffe, insbesondere Kalksteinmehl, Weichmacher, insbesondere Prozessöle, Faserfüllstoffe, Talkum, Ölpaste, Polyethylen, Butylkautschuk, Harz und/oder Stearinsäure. In einer besonders vorteilhaften Ausführungsform sind die Materialien ausgewählt aus einer Gruppe mindestens umfassend mindestens ein Bitumen 160/220, mindestens einen anorganischen, pulverförmigen Füllstoff, insbesondere Kalksteinmehl 10/70, mindestens einen Weichmacher, mindestens einen Faserfüllstoff, Talkum, mindestens ein Polyethylen, mindestens einen Butylkautschuk, mindestens ein Kohlenwasserstoff-Harz und/oder Stearinsäure.

Vorzugsweise weist das bitumenhaltige Material einen Erweichungspunkt Ring und Kugel gemäß DIN EN 1427: 2015 in einem Bereich von etwa 75 °C bis etwa 170 °C, weiter bevorzugt in einem Bereich von etwa 100 °C bis etwa 160 °C, und besonders bevorzugt in einem Bereich von etwa 110 °C bis etwa 150 °C, auf.

Vorzugsweise weist das bitumenhaltige Material eine statische Fließgrenze mittels Konuspenetration gemäß BS 2499-3: 1993 in einem Bereich von etwa 40 mm/10 bis etwa 60 mm/10, weiter bevorzugt in einem Bereich von etwa 45 mm/10 bis etwa 55 mm/10, und besonders bevorzugt von etwa 50 mm/10, auf.

Vorzugsweise weist das bitumenhaltige Material ein elastisches Rückstellvermögen gemäß BS 2499-3: 1993 in einem Bereich von etwa 10 % bis etwa 35 %, weiter in einem Bereich von etwa 12 % bis etwa 30 %, und besonders bevorzugt in einem Bereich von etwa 15 % bis etwa 25 %, auf.

Bevorzugt ist Bitumen in einer Menge in einem Bereich von etwa 30 Gew.-% bis etwa 50 Gew.-%, bezogen auf die Gesamtmenge des Materials, in dem bitumenhaltigen Material enthalten. Weiter bevorzugt ist Bitumen in einer Menge in einem Bereich von etwa 35 Gew.-% bis etwa 45 Gew.-%, bezogen auf die Gesamtmenge des Materials, in dem bitumenhaltigen Material enthalten. Besonders bevorzugt ist Bitumen in einer Menge in einem Bereich von etwa 40 Gew.-% bis etwa 42 Gew.-%, bezogen auf die Gesamtmenge des Materials, in dem bitumenhaltigen Material enthalten. Vorteilhafterweise weist das eingesetzte Bitumen mit einem Erweichungspunkt Ring und Kugel, gemessen gemäß DIN EN 1427, in einem Bereich von etwa 35 °C bis etwa 43 °C und einer Nadelpenetration bei 23 °C, gemessen gemäß DIN EN 1426, in einem Bereich von etwa 160 bis etwa 220 je 0, 1 mm auf.

Bevorzugt ist der mindestens eine anorganische und pulverförmige Füllstoff in einer Menge in einem Bereich von etwa 25 Gew.-% bis etwa 45 Gew.-%, bezogen auf die Gesamtmenge des Materials, in dem bitumenhaltigen Material enthalten. Weiter bevorzugt ist der mindestens eine anorganische und pulverförmige Füllstoff in einer Menge in einem Bereich von etwa 30 Gew.-% bis etwa 40 Gew.-%, bezogen auf die Gesamtmenge des Materials, in dem bitumenhaltigen Material enthalten. Besonders bevorzugt ist der mindestens eine anorganische und pulverförmige Füllstoff in einer Menge in einem Bereich von etwa 34 Gew.-% bis etwa 35 Gew.-%, bezogen auf die Gesamtmenge des Materials, in dem bitumenhaltigen Material enthalten. Besonders bevorzugt wird Kalksteinmehl als pulverförmiger Füllstoff zugesetzt, weiter bevorzugt Kalksteinmehl, welches bei einer Siebung mit einem 63 µm-Sieb einen Rückstand von nicht mehr als 20 Massen-%. bevorzugt nicht mehr als 15 Massen-%, und bei einer Siebung mit einem 1.000 µm-Sieb keinen Rückstand mehr aufweist.

Bevorzugt ist mindestens ein Weichmacher in einer Menge in einem Bereich von etwa 3 Gew.-% bis etwa 15 Gew.-%, bezogen auf die Gesamtmenge des Materials, in dem bitumenhaltigen Material enthalten. Weiter bevorzugt ist mindestens ein Weichmacher in einer Menge in einem Bereich von etwa 5 Gew.-% bis etwa 10 Gew.-%, bezogen auf die Gesamtmenge des Materials, in dem bitumenhaltigen Material enthalten. Besonders bevorzugt ist mindestens ein Weichmacher in einer Menge in einem Bereich von etwa 7 Gew.-% bis etwa 8 Gew.-%, bezogen auf die Gesamtmenge des Materials, in dem bitumenhaltigen Material enthalten. Der Weichmacher ist besonders bevorzugt ausgewählt aus einer Gruppe umfassend Prozessöle, insbesondere paraffinische und/oder naphthenische Prozessöle.

Bevorzugt ist der mindestens eine Faserfüllstoff in einer Menge in einem Bereich von etwa 2 Gew.-% bis etwa 12 Gew.-%, bezogen auf die Gesamtmenge des Materials, in dem bitumenhaltigen Material enthalten. Weiter bevorzugt ist der mindestens eine Faserfüllstoff in einer Menge in einem Bereich von etwa 4 Gew.-% bis etwa 8 Gew.-%, bezogen auf die Gesamtmenge des Materials, in dem bitumenhaltigen Material enthalten. Besonders bevorzugt ist der mindestens eine Faserfüllstoff in einer Menge in einem Bereich von etwa 5 Gew.-% bis etwa 6 Gew.-%, bezogen auf die Gesamtmenge des Materials, in dem bitumenhaltigen Material enthalten.

Bevorzugt ist Talkum, bevorzugt vermischt mit Öl, in einer Menge in einem Bereich von etwa 0,1 Gew.-% bis etwa 10,0 Gew.-%, bezogen auf die Gesamtmenge des Materials, in dem bitumenhaltigen Material enthalten. Weiter bevorzugt ist Talkum, bevorzugt vermischt mit Öl, in einer Menge in einem Bereich von etwa 1,0 Gew.-% bis etwa 7,0 Gew.-%, bezogen auf die Gesamtmenge des Materials, in dem bitumenhaltigen Material enthalten. Besonders bevorzugt ist Talkum, bevorzugt vermischt mit Öl, in einer Menge in einem Bereich von etwa 4,0 Gew.-% bis etwa 5,0 Gew.-%, bezogen auf die Gesamtmenge des Materials, in dem bitumenhaltigen Material enthalten. Die vorstehenden Mengenangaben beziehen sich bei Einsatz einer Paste aus Öl und Talkum auf die Gesamtmenge von Öl und Talkum, wobei Talkum in einer solchen Ölpaste in einer Menge in einem Bereich von etwa 50 Gew.% bis etwa 95Gew.%, bezogen auf die Gesamtmenge der Ölpaste, in dieser vorhanden ist.

Bevorzugt ist das mindestens eine Polyethylen in einer Menge in einem Bereich von etwa 1,0 Gew.-% bis etwa 5,0 Gew.-%, bezogen auf die Gesamtmenge des Materials, in dem bitumenhaltigen Material enthalten. Weiter bevorzugt ist das mindestens eine Polyethylen in einer Menge in einem Bereich von etwa 2,5 Gew.-% bis etwa 4,5 Gew.-%, bezogen auf die Gesamtmenge des Materials, in dem bitumenhaltigen Material enthalten. Besonders bevorzugt ist das mindestens eine Polyethylen in einer Menge in einem Bereich von etwa 3,3 Gew.-% bis etwa 3,7 Gew.-%, bezogen auf die Gesamtmenge des Materials, in dem bitumenhaltigen Material enthalten.

Bevorzugt ist der mindestens eine Butylkautschuk in einer Menge in einem Bereich von etwa 0,5 Gew.-% bis etwa 3,0 Gew.-%, bezogen auf die Gesamtmenge des Materials, in dem bitumenhaltigen Material enthalten. Weiter bevorzugt ist der mindestens eine Butylkautschuk in einer Menge in einem Bereich von etwa 1,0 Gew.-% bis etwa 2,5 Gew.-%, bezogen auf die Gesamtmenge des Materials, in dem bitumenhaltigen Material enthalten. Besonders bevorzugt ist der mindestens eine Butylkautschuk in einer Menge in einem Bereich von etwa 1,5 Gew.-% bis etwa 2,0 Gew.-%, bezogen auf die Gesamtmenge des Materials, in dem bitumenhaltigen Material enthalten.

Bevorzugt ist das mindestens eine Harz in einer Menge in einem Bereich von etwa 0,2 Gew.-% bis etwa 1,5 Gew.-%, bezogen auf die Gesamtmenge des Materials, in dem bitumenhaltigen Material enthalten. Weiter bevorzugt ist das mindestens eine Harz in einer Menge in einem Bereich von etwa 0,4 Gew.-% bis etwa 1,0 Gew.-%, bezogen auf die Gesamtmenge des Materials, in dem bitumenhaltigen Material enthalten. Besonders bevorzugt ist das mindestens eine Harz in einer Menge in einem Bereich von etwa 0,5 Gew.-% bis etwa 0,7 Gew.-%, bezogen auf die Gesamtmenge des Materials, in dem bitumenhaltigen Material enthalten. Bevorzugt weist das mindestens eine Harz und besonders bevorzugt das mindestens eine Kohlenwasserstoff-Harz ein Molekulargewicht in einem Bereich von etwa 1.000 g/mol bis 5.000 g/mol, bevorzugt etwa 2.000 g/mol bis 3.500 g/mol auf. Weiter bevorzugt weist das Kohlenwasserstoff-Harz eine Schmelzviskosität bei 180°C gemäß ASTM D 3236 in einem Bereich von etwa 100 cps bis etwa 800 cps, bevorzugt in einem Bereich von etwa 250 cps bis etwa 500 cps auf.

Bevorzugt ist ein Stabilisationsmittel, bevorzugt Stearinsäure, in einer Menge in einem Bereich von etwa 0,02 Gew.-% bis etwa 0,80 Gew.-%, bezogen auf die Gesamtmenge des Materials, in dem bitumenhaltigen Material enthalten. Weiter bevorzugt ist Stearinsäure in einer Menge in einem Bereich von etwa 0,05 Gew.-% bis etwa 0,5 Gew.-%, bezogen auf die Gesamtmenge des Materials, in dem bitumenhaltigen Material enthalten. Besonders bevorzugt ist Stearinsäure in einer Menge in einem Bereich von etwa 0,08 Gew.-% bis etwa 0,12 Gew.-%, bezogen auf die Gesamtmenge des Materials, in dem bitumenhaltigen Material enthalten.

Vorzugsweise weist der erste Schneckenextruder des Doppelschneckenextruders eine erste Extruderachse und der zweite Schneckenextruder eine zweite Extruderachse auf. Bevorzugt sind die Extruderachsen Mittellängsachsen der jeweiligen Schneckenextruder.

In einer bevorzugten Ausführungsform ist der Doppelschneckenextruder in einem Innenraum des Extrudergehäuses angeordnet. Weiter bevorzugt weist der Innenraum des Extrudergehäuses im Wesentlichen die Form des Doppelschneckenextruders auf, wobei der Doppelschneckenextruder im Innenraum um die Extruderachsen rotierbar ist.

Der Begriff "im Wesentlichen" gibt einen Toleranzbereich an, der für den Fachmann unter wirtschaftlichen und technischen Gesichtspunkten zu vertreten ist, so dass das entsprechende Merkmal noch als solches zu erkennen oder verwirklicht ist.

Erfindungsgemäß weisen der erste Schneckenextruder und der zweite Schneckenextruder jeweils einen Kanal auf. Der Kanal eines jeden Schneckenextruders erstreckt sich zwischen den Windungen der jeweiligen ersten und zweiten Helix. Bevorzugt erstreckt sich die Kanalbreite des Kanals von einer Treibseite der Helix bis zu einer Folgeseite der Helix und im Wesentlichen parallel zur Extruderachse. Bevorzugt ist die Treibseite der Helix die Seite des Schneckenextruders die ein zu verarbeitendes bitumenhaltiges Material im Extrudergehäuse ausgehend von der Einzugszone, über die Kompressionszone bis zur Ausstoßzone treibt bzw. befördert. Bevorzugt ist die Folgeseite der Helix die abgewandte Seite der Treibseite und ist weiter bevorzugt durch eine Stirnseite der Helix mit der Treibseite verbunden. Die Kanalbreite, die sich von der Einzugszone bis zur Ausstoßzone des Doppelschneckenextruders in ihrer Breite verringert, bewirkt bevorzugt eine Abnahme einer Helixsteigung. Vorzugsweise ist die Steigung der Helix nicht konstant. Besonders bevorzugt weisen die Schneckenextruder über deren jeweiligen Helices eine progressive Form auf.

Erfindungsgemäß nehmen die jeweiligen Kanäle ausgehend von der Einzugszone, über die Kompressionszone bis zur Ausstoßzone in ihrer Kanalhöhe ab. Bevorzugt erstreckt sich die Kanalhöhe von einem Kanalgrund, auf der Oberfläche der jeweiligen Welle des Schneckenextruders, bis zur Höhe der Stirnseite der Helix. Vorzugsweise steht die Kanalhöhe im Bereich der Einzugszone im Verhältnis zur Kanalhöhe im Bereich der Ausstoßzone. Bevorzugt liegt das Verhältnis der Kanalhöhe von Einzugszone zur Ausstoßzone in einem Bereich von etwa 2,50 zu 1,00 bis etwa 1,10 zu 1,00, weiter bevorzugt liegt das Verhältnis in einem Bereich von etwa 1,75 zu 1,00 bis etwa 1,15 zu 1,00 und besonders bevorzugt liegt das Verhältnis in einem Bereich von etwa 1,30 zu 1,00 bis etwa 1,20 zu 1,00.

Der erste Schneckenextruder weist auf der ersten Welle die erste Helix und der zweite Schneckenextruder auf der zweiten Welle die zweite Helix auf. Bevorzugt ist der Kanal der Schneckenextruder seitlich von den Windungen der Helix begrenzt und weist den Kanalgrund auf der Oberfläche der jeweiligen Welle des Schneckenextruders auf. Bevorzugt weist die erste und/oder zweite Welle der Schneckenextruder keinen gleichbleibenden Wellendurchmesser auf. Bevorzugt nehmen die erste und die zweite Welle ausgehend von der Einzugszone, über die Kompressionszone bis zur Ausstoßzone im Wellendurchmesser zu. Weiter bevorzugt nehmen die erste und die zweite Welle ausgehend von der Kompressionszone bis zur Ausstoßzone im Wellendurchmesser im Wesentlichen stetig zu. Vorzugsweise steht der Wellendurchmesser im Bereich der Einzugszone im Verhältnis zum Wellendurchmesser im Bereich der Ausstoßzone. Bevorzugt liegt das Verhältnis des Wellendurchmessers von Einzugszone zur Ausstoßzone in einem Bereich von etwa 1,00 zu 2,50 bis etwa 1,00 zu 1,10, weiter bevorzugt liegt das Verhältnis in einem Bereich von etwa 1,00 zu 1,75 bis etwa 1,00 zu 1,15 und besonders bevorzugt liegt das Verhältnis in einem Bereich von etwa 1,00 zu 1,30 bis etwa 1,00 zu 1,20.

Bevorzugt weisen der erste und der zweite Schneckenextruder jeweils einen ersten Lagerkopf und einen zweiten Lagerkopf auf. Die Lagerköpfe sind vorzugsweise seitlich an die erste und zweite Welle angeordnet. Bevorzugt bilden die Lagerköpfe in Richtung der Extruderachsen zwei Endbereiche eines jeden Schneckenextruders. Insbesondere weisen die Lagerköpfe keine Helix wie die Wellen auf. Bevorzugt stehen die ersten Lagerköpfe in mittelbarem oder unmittelbarem Kontakt mit einer Antriebseinheit und sind über diese gelagert. Die zweiten Lagerköpfe sind mit dem Extrudergehäuse verbunden und über dieses gelagert.

Des Weitern weisen der erste Schneckenextruder und der zweite Schneckenextruder an jeweils mindestens einem Endbereich und bevorzugt mindestens im ersten Lagerkopf eine Antriebsaufnahme auf. Die Antriebsaufnahmen sind vorzugsweise mit der Antriebseinheit verbunden, so dass die Schneckenextruder um ihre jeweiligen Extruderachsen rotierbar sind.

In einer bevorzugten Ausführungsform weisen die erste und die zweite Helix jeweils einen Helixdurchmesser auf. Bevorzugt erstreckt sich der Helixdurchmesser rechtwinklig durch die Extruderachsen und von Stirnseite zu Stirnseite einer jeden Helix verlaufend. Bevorzugt ist der Helixdurchmesser eine Art Gewindeaußendurchmesser. Vorzugsweise ist der Helixdurchmesser ausgehend von der Einzugszone, über die Kompressionszone bis zur Ausstoßzone im Wesentlichen gleichbleibend. In einer besonders bevorzugten Ausführungsform ist der Helixdurchmesser von der Einzugszone bis zur Ausstoßzone im Wesentlichen gleichbleibenden und die Welle des Schneckenextruders nimmt in ihrem Wellendurchmesser zu.

Erfindungsgemäß bildet der Kanal zwischen den Windungen der ersten und der zweiten Helix jeweils einen Raum. Bevorzugt ist der Raum wie der Kanal von der Treibseite, der Folgeseite und dem Kanalgrund begrenzt. Weiter bevorzugt ist der Raum über eine offene Seite des Kanals durch das Extrudergehäuse begrenzt.

Vorzugsweise weist das Extrudergehäuse ein Fassungsvolumen auf. Soweit in der vorliegenden Erfindung der Begriff "Fassungsvolumen" im Zusammenhang mit dem Extrudergehäuse verwendet wird, ist hierunter der Bereich im Extrudergehäuse zu verstehen, der nicht vom Doppelschneckenextruder ausgefüllt ist. Vorzugsweise ist das Fassungsvolumen der Bereich im Extrudergehäuse in dem ein zu verarbeitendes bitumenhaltiges Material anordenbar ist. Insbesondere ist das Fassungsvolumen des Extrudergehäuses im Bereich der Einzugszone größer als im Bereich der Ausstoßzone. Bevorzugt ist die Kanalbreite des Kanals im Bereich der Einzugszone größer als im Bereich der Ausstoßzone. Vorzugsweise steht die Kanalbreite im Bereich der Einzugszone im Verhältnis zur Kanalbreite im Bereich der Ausstoßzone. Bevorzugt liegt das Verhältnis der Kanalbreite von Einzugszone zur Ausstoßzone in einem Bereich von etwa 3,5 zu 1,0 bis etwa 1,5 zu 1,0, weiter bevorzugt liegt das Verhältnis in einem Bereich von etwa 2,5 zu 1,0 bis etwa 1,5 zu 1,0 und besonders bevorzugt liegt das Verhältnis bei etwa 2,1 zu 1,0.

Erfindungsgemäß sind die erste Helix und die zweite Helix kämmend ineinandergreifend ausgebildet. Vorzugsweise greifen die erste und zweite Helix in den Kanal des jeweils anderen ersten und zweiten Schneckenextruders. Vorzugweise verdrängen die erste und zweite Helix ein gewisses Volumen im Extrudergehäuses und mindern das Fassungsvolumen. Bevorzugt verdrängen die erste und zweite Helix ein gewisses Volumen im Bereich des jeweils anderen Kanals.

Vorzugsweise ist der Abstand der ersten Helix von der zweiten Helix, die im jeweils anderen Kanal des ersten und zweiten Schneckenextruders angeordnet sind, in der Einzugszone größer als der Abstand der ersten Helix von der zweiten Helix in der Ausstoßzone. Der Abstand der ersten Helix von der zweiten Helix in der Einzugszone liegt im Verhältnis zum Abstand der ersten Helix von der zweiten Helix in der Ausstoßzone bevorzugt in einem Bereich von etwa 5 zu 1 bis etwa 2 zu 1, weiter bevorzugt in einem Bereich von etwa 4 zu 1 bis etwa 2 zu 1, und besonders bevorzugt bei etwa 3 zu 1.

Erfindungsgemäß weist der Doppelschneckenextruder die Einzugszone, die Kompressionszone und die Ausstoßzone auf. Weiter ist über die Zugabeeinheit ein zu verarbeitendes bitumenhaltiges Material in die Einzugszone des Doppelschneckenextruders bzw. in den Zugabebereich zuführbar. Vorzugsweise ist die Kompressionszone eine übergreifende Zone. Bevorzugt erstreckt sich die Kompressionszone mindestens zu einem Teil in die Einzugszone. Weiter bevorzugt erstreckt sich die Kompressionszone mindestens zu einem Teil in die Ausstoßzone. Besonders bevorzugt erstreckt sich die Kompressionszone mindestens zu einem Teil in die Einzugszone und mindestens zu einem Teil und bevorzugt vollständig in die Ausstoßzone.

Wird im Rahmen der Erfindung der Begriff "Kompression" oder "Kompressionszone" verwendet, so ist hierunter eine Zusammenpressung mit Erhöhung des Drucks und Verkleinerung des Volumens zu verstehen. Bevorzugt ist hierunter die Kompression eines zu verarbeitenden Materials zu verstehen. Weiter bevorzugt ist hierunter die Kompression von Gasen wie bspw. Luft zu verstehen, die sich als Gaseinschlüsse im Materialzwischenraum angesammelt und/oder angestaut haben. Bevorzugt steigt der Faktor der Kompression ausgehend von der Einzugszone in Richtung der Ausstoßzone an. Vorzugsweise findet im Extrudergehäuse eine Entgasung des Materials statt. Besonders bevorzugt findet die Entgasung, bei der sich das Gas verflüchtigt, ausgehend von der Ausstoßzone in Richtung der Einzugszone statt. Vorzugsweise wird das Gas hierbei vom bitumenhaltigen Material verdrängt.

Wird im Rahmen der Erfindung der Begriff "plastifiziert", "plastifizieren" oder "Plastifizierung" verwendet, so ist hierunter neben der Kompression die Verarbeitung des Materials in der Vorrichtung und insbesondere im Extrudergehäuse zu verstehen. Vorzugsweise wird das zu verarbeitende bitumenhaltige Material durch den Doppelschneckenextruder vermengt und bevorzugt erwärmt, so dass eine homogene Bitumenmasse aus dem bitumenhaltigen Material entsteht. Das bevorzugte Erwärmen oder Erhitzen des zu verarbeitenden Materials geschieht vorzugsweise so lange, bis zumindest eine spezifische Schmelztemperatur erreicht ist. Das Erwärmen des Materials geschieht vorzugsweise durch den Druck der Kompression und/oder der inneren sowie äußeren Reibung des Materials im Extrudergehäuse.

In einer bevorzugten Ausführungsform weist die mobile Vorrichtung mindestens eine Antriebseinheit auf, die eine rotatorische Bewegung generiert. Bevorzugt ist die rotatorische Bewegung auf den Doppelschneckenextruder übertragbar. Weiter bevorzugt ist die rotatorische Bewegung auf die jeweiligen Extruderachsen des ersten und zweiten Schneckenextruders übertragbar. Besonders bevorzugt ist die rotatorische Bewegung entsprechend auf die Extruderachsen übertragbar, so dass diese eine zueinander entgegenläufige Rotation erfahren.

In einer weiter bevorzugten Ausführungsform weist die Austrageeinheit der Vorrichtung eine Austragedüse auf, die insbesondere eine Formdüse ist. Bevorzugt umfasst die Austrageeinheit eine Verjüngung, aus der ein verarbeitetes bitumenhaltiges Material austretbar ist. Insbesondere ist die Austrageeinheit dem Extrudergehäuse nachgeordnet. Bevorzugt ist die Austrageeinheit der Ausstoßzone des Extrudergehäuses nachgeordnet. Weiter bevorzugt ist aus der Austrageeinheit ein bandförmiges bitumenhaltiges Material austretbar. Besonders bevorzugt ist aus der Austrageeinheit ein pulsations- und/oder gaseinschlussarmes bandförmiges bitumenhaltiges Material austretbar. Bevorzugt ist eine Mündung der Austrageeinheit gegen die Nahtflanke gerichtet, so dass das verarbeitete bitumenhaltige Material an dieser aufbringbar ist.

Vorzugsweise weist die Zugabeeinheit der Vorrichtung eine Art Trichter auf. Bevorzugt umfasst die Zugabeeinheit eine Zugabeöffnung, durch die ein zu verarbeitendes bitumenhaltiges Material in das Extrudergehäuse eintretbar ist. Weiter bevorzugt ist die Zugabeöffnung der Zugabeeinheit eine Ausnehmung durch das Extrudergehäuse. In einer bevorzugten Ausführungsform ist die Zugabeöffnung der Zugabeeinheit deckungsgleich mit dem Zugabebereich des Doppelschneckenextruders.

Bevorzugt ist der Zugabebereich von einer ersten Wellenaußenkontur der ersten Welle und einer zweiten Wellenaußenkontur der zweiten Welle in der Einzugszone begrenzt. Weiter bevorzugt sind die jeweiligen Wellenaußenkonturen immer in dem Bereich der Welle angeordnet, der am weitesten entfernt von der jeweils anderen Welle angeordnet ist. Insbesondere ist die Wellenaußenkontur bei einer Rotation der Welle kein festgelegter und somit kein mitrotierender Ort auf der Welle.

In einer alternativen Ausführungsform ist der Zugabebereich von einer ersten Helixaußenkontur der ersten Helix und einer zweiten Helixaußenkontur der zweiten Helix in der Einzugszone begrenzt. Vorzugsweise sind die jeweiligen Helixaußenkonturen immer in dem Bereich der Helix angeordnet, der am weitesten entfernt von der jeweils anderen Helix angeordnet ist. Insbesondere ist die Helixaußenkontur bei einer Rotation der Welle kein festgelegter und somit kein mitrotierender Ort auf der Welle.

In einer vorteilhaften Ausführungsform ist die erste Helix des ersten Schneckenextruders als eine rechtsgängige Helix und die zweite Helix des zweiten Schneckenextruders als eine linksgängige Helix ausgebildet ist. Bevorzugt ist hierunter zu verstehen, dass sich die Windung der ersten Helix im Uhrzeigersinn um die erste Welle herum windet und sich die Windung der zweiten Helix gegen den Uhrzeigersinn um die zweite Welle herum windet.

Vorzugsweise weisen die erste Helix des ersten Schneckenextruders und/oder die zweite Helix des zweiten Schneckenextruders eine im Wesentlichen gleichbleibende Wandstärke bzw. Helixbreite auf. Bevorzugt beschreibt die Helixbreite eine Windungsdicke der Helix, die sich von der Treibseite bis zur Folgeseite erstreckt. Weiter bevorzugt ist die Helixbreite in etwa so breit wie die Stirnseite der Helix breit ist.

In einer bevorzugten Ausführungsform bilden die Schneckenextruder einen Spalt. Vorzugsweise ist der Spalt zwischen der Stirnseite der einen Helix und dem Kanalgrund bzw. einem Wellenumfang der jeweils anderen Welle ausgebildet. Bevorzugt ist der Spalt im Bereich der Einzugszone stärker ausgeprägt als im Bereich der Ausstoßzone. Weiter bevorzugt ist die Stärke der Ausprägung des Spaltes abhängig vom Wellendurchmesser. Besonders bevorzugt ist der Spalt im Bereich der Ausstoßzone nahezu geschlossen, wodurch die eine Helix am Kanalgrund bzw. am Wellenumfang der jeweils anderen Welle nahezu anliegt. Vorzugsweise weist die Spaltstärke des Spaltes in der Einzugszone ein Verhältnis zur Kanalhöhe in der Einzugszone auf. Bevorzugt liegt das Verhältnis des Spaltes zur Kanalhöhe in der Einzugszone in einem Bereich von etwa 1,0 zu 6,0 bis etwa 1,0 zu 2,0, weiter bevorzugt liegt das Verhältnis in einem Bereich von etwa 1,0 zu 5,5 bis etwa 1,0 zu 4,0 und besonders bevorzugt liegt das Verhältnis in einem Bereich von etwa 1,0 zu 5,0 bis etwa 1,0 zu 4,5.

Besonders zweckmäßig ist es, wenn zusätzlich zu einer mechanischen Wärmeeinwirkung ein zu verarbeitendes bitumenhaltiges Material einer weiteren thermischen Einwirkung ausgesetzt ist. Bevorzugt erfolgt diese weitere thermische Einwirkung auf das bitumenhaltige Material im Bereich der Zugabeeinheit, weiter bevorzugt im Bereich der Austrageeinheit und besonders bevorzugt im Bereich des Extrudergehäuses. Insbesondere beeinflusst die thermische Einwirkung das Fließverhalten und die Bildsamkeit des Materials. Vorzugsweise werden das Fließverhalten und die Bildsamkeit unter thermischem Einwirken verbessert. Bevorzugt weist die Vorrichtung eine Heizeinrichtung zum Erwärmen eines Materials auf. Vorzugsweise ist die Heizeinrichtung in einem Temperaturbereich von etwa 20 °C bis etwa 120 °C einstellbar. Bevorzugt ist die Temperatur der Heizeinrichtung entsprechend gewählt, so dass ein zu verarbeitendes bitumenhaltiges Material weicher und gut formbar ist. Besonders bevorzugt ist die Temperatur der Heizeinrichtung entsprechend gewählt, so dass ein verarbeitetes bitumenhaltiges Material nach Austritt aus der Austrageeinheit im Wesentlichen formstabil ist und an der Nahtflanke haftet. Die Heizeinrichtung ist bevorzugt eine Begleitheizung im Bereich des Extrudergehäuses und/oder eine Düsenbegleitheizung im Bereich der Austrageeinheit.

Insbesondere betrifft die vorliegende Erfindung eine Verwendung einer mobilen Vorrichtung wie vorstehend beschrieben zum Herstellen fugenförmiger Nähte an Teilflächen von Asphaltdeckschichten durch Plastifizieren und Ausbringen eines bandförmigen bitumenhaltigen Materials entlang einer Nahtflanke einer Teilfläche.

Vorzugsweise wird das zu verarbeitende bitumenhaltige Material in der mobilen Vorrichtung und bevorzugt in einem Extrudergehäuse der Vorrichtung entsprechend plastifiziert und komprimiert, so dass ein gaseinschlussarmes und homogenes bitumenhaltige Material entsteht.

Die vorliegende Erfindung betrifft des Weiteren ein Verfahren zum Herstellen fugenförmiger Nähte an Teilflächen von Asphaltdeckschichten durch Ausbringen eines bandförmigen bitumenhaltigen Materials entlang einer Nahtflanke einer Teilfläche, mit einer Vorrichtung wie vorstehend beschrieben, wobei
(i) das zu verarbeitende bitumenhaltige Material über eine Zugabeeinheit in einen Zugabebereich, gebildet durch eine Einzugszone des Doppelschneckenextruders, zugeführt wird,
(ii) das zu verarbeitende bitumenhaltige Material mindestens in der Einzugszone, einer Kompressionszone und/oder einer Ausstoßzone des Doppelschneckenextruders plastifiziert und komprimiert wird, und
(iii) das verarbeitete bitumenhaltige Material nach Verlassen der Ausstoßzone des Doppelschneckenextruders über eine Austrageeinheit in Strangform ausgepresst und an die Nahtflanke angedrückt wird.

Vorzugsweise weist die Zugabeeinheit der Vorrichtung eine Art Trichter auf, über welchen das zu verarbeitende bitumenhaltige Material in den Zugabebereich, gebildet durch die Einzugszone, zugeführt wird. Bevorzugt weist das Extrudergehäuse ein Fassungsvolumen auf, in welches sich das bitumenhaltige Material nach der Zuführung über die Zugabeeinheit erstreckt. Vorzugsweise ist das Fassungsvolumen der Bereich im Extrudergehäuse, in dem ein zu verarbeitendes bitumenhaltiges Material angeordnet wird. Insbesondere ist das Fassungsvolumen des Extrudergehäuses im Bereich der Einzugszone größer als im Bereich der Ausstoßzone.

Bevorzugt greifen eine erste Helix und eine zweite Helix eines ersten und zweiten Schneckenextruders kämmend ineinander, so dass diese bei einer Rotation einer ersten und einer zweiten Welle um eine jeweilige Extruderachse nicht miteinander verhaken bzw. sich nicht blockieren.

Bevorzugt weist jede Helix eine Treibseite, eine Stirnseite und eine Folgeseite auf. Bevorzugt ist die Treibseite der Helix die Seite des Schneckenextruders mit der ein zu verarbeitendes bitumenhaltiges Material im Extrudergehäuse ausgehend von der Einzugszone, über die Kompressionszone bis zur Ausstoßzone getrieben bzw. befördert wird. Bevorzugt ist die Folgeseite der Helix die abgewandte Seite der Treibseite und ist weiter bevorzugt durch die Stirnseite mit der Treibseite verbunden.

Vorzugsweise wird das zu verarbeitende bitumenhaltige Material mindestens in der Einzugszone, der Kompressionszone und/oder der Ausstoßzone des Doppelschneckenextruders plastifiziert und komprimiert. Insbesondere wird das zu verarbeitende bitumenhaltige Material in der Kompressionszone plastifiziert und komprimiert. Vorzugsweise ist die Kompressionszone eine übergreifende Zone. Bevorzugt erstreckt sich die Kompressionszone mindestens zu einem Teil in die Einzugszone. Weiter bevorzugt erstreckt sich die Kompressionszone mindestens zu einem Teil in die Ausstoßzone. Besonders bevorzugt erstreckt sich die Kompressionszone mindestens zu einem Teil in die Einzugszone und mindestens zu einem Teil und bevorzugt vollständig in die Ausstoßzone.

In einer bevorzugten Ausführungsform bilden die ineinander kämmenden Schneckenextruder einen Spalt. Vorzugsweise ist der Spalt zwischen der Stirnseite der einen Helix und dem Kanalgrund bzw. einem Wellenumfang der jeweils anderen Welle ausgebildet. Bevorzugt ist der Spalt im Bereich der Einzugszone stärker ausgeprägt als im Bereich der Ausstoßzone. Weiter bevorzugt ist die Stärke der Ausprägung des Spaltes abhängig vom Wellendurchmesser. Besonders bevorzugt ist der Spalt im Bereich der Ausstoßzone nahezu geschlossen. Bevorzugt ist das Fassungsvolumen mit dem Spalt im Bereich der Einzugszone größer als im Bereich der Ausstoßzone. Vorzugsweise kann das zu verarbeitende bitumenhaltige Material mit dem Spalt im Bereich der Einzugszone einfacher in das Extrudergehäuse zugeführt werden. Vorzugsweise verteilt sich das zu verarbeitende bitumenhaltige Material durch den Spalt besser im Bereich der Einzugszone.

Bevorzugt wird das zu verarbeitende bitumenhaltige Material im Extrudergehäuse durch die Rotation der Wellen in Richtung der Ausstoßzone befördert. Weiter bevorzugt wird das zu verarbeitende bitumenhaltige Material im Extrudergehäuse bzw. im Bereich des Kanals und des Spalts in Richtung der Ausstoßzone befördert. Vorzugsweise steigt im Extrudergehäuse der Kompressionsfaktor des Materials, während dessen Vorschubs, ausgehend von der Einzugszone in Richtung der Ausstoßzone an. Vorzugsweise wird im Extrudergehäuse mit der Kompression das Material entgast. Besonders bevorzugt wird das Material ausgehend von der Ausstoßzone in Richtung der Einzugszone entgast. Vorzugsweise wird das Gas hierbei vom vorschiebenden bitumenhaltigen Material in die Gegenrichtung des Extrudergehäuses verdrängt.

Bevorzugt wird das zu verarbeitende bitumenhaltige Material plastifiziert. Vorzugsweise wird das zu verarbeitende bitumenhaltige Material durch den Doppelschneckenextruder vermengt und bevorzugt erhitzt, so dass eine heiße, homogene Bitumenmasse aus dem bitumenhaltigen Material entsteht. Weiter bevorzugt wird das zu verarbeitende bitumenhaltige Material durch die kämmend ineinandergreifende Bewegung des ersten und zweiten Schneckenextruders homogenisiert. Besonders bevorzugt wird die Entgasung des Materials durch die kämmende Bewegung des ersten und zweiten Schneckenextruders unterstützt.

Vorteilhafterweise ist das bitumenhaltige Material im Bereich der Ausstoßzone entsprechend komprimiert und plastifiziert, so dass das bitumenhaltige Material im Wesentlichen vollständig vermengt, entgast und bevorzugt erwärmt wird. Vorzugsweise wird der Vorschub bzw. der Massestrom des Materials zumindest durch die Entgasung im Extrudergehäuse pulsationsärmer. Besonders bevorzugt wird die Pulsation des Materials in der Ausstoßzone im Wesentlichen eliminiert.

Vorzugsweise wird das verarbeitete bitumenhaltige Material nach Verlassen der Ausstoßzone des Doppelschneckenextruders über eine Austrageeinheit in Strangform ausgepresst und an die Nahtflanke angedrückt. In einer weiter bevorzugten Ausführungsform weist die Austrageeinheit der Vorrichtung eine Austragedüse auf, die insbesondere eine Formdüse ist. Besonders bevorzugt tritt das bitumenhaltige Material mit einem im Wesentlichen gleichmäßigen Massestrom aus der Austrageeinheit aus. Vorteilhafterweise fährt die mobile Vorrichtung mit einer im Wesentlichen gleichbleibenden Geschwindigkeit an der Nahtflanke entlang und das verarbeitete und strangförmige bitumenhaltige Material wird an diese angedrückt. Vorzugsweise wird eine Mündung der Austrageeinheit gegen die Nahtflanke gerichtet, aus welcher das bitumenhaltige Material austritt. Das strangförmige bitumenhaltige Material tritt mit im Wesentlichen gleichbleibender Qualität aus der Austrageeinheit aus.

Vorzugsweise wird zusätzlich zur mechanischen Wärmeeinwirkung das bitumenhaltige Material einer weiteren thermischen Einwirkung ausgesetzt. Bevorzugt weist die Vorrichtung eine Heizeinrichtung zum Erwärmen des Materials auf. Die Heizeinrichtung ist bevorzugt eine Begleitheizung im Bereich des Extrudergehäuses und/oder eine Düsenbegleitheizung im Bereich der Austrageeinheit. Vorzugsweise ist die Heizeinrichtung in einem Temperaturbereich von etwa 20 °C bis etwa 120 °C eingestellt. Bevorzugt ist die Temperatur der Heizeinrichtung entsprechend gewählt, so dass ein zu verarbeitendes bitumenhaltiges Material weicher und gut formbar wird. Besonders bevorzugt ist die Temperatur der Heizeinrichtung entsprechend gewählt, so dass ein verarbeitetes bitumenhaltiges Material nach Austritt aus der Austrageeinheit im Wesentlichen formstabil wird und an der Nahtflanke haftet.

Weitere vorteilhafte Ausgestaltungen gehen aus den nachfolgenden Zeichnungen hervor. Gleiche Teile oder Teile mit gleicher Funktion können die gleichen Bezugszeichen aufweisen. Es zeigen:
- Fig. 1: eine perspektivische Draufsicht einer mobilen Vorrichtung 1;
- Fig. 2: eine perspektivische Ansicht eines Doppelschneckenextruders 10;
- Fig. 3: eine perspektivische Ansicht eines Teils eines Extrudergehäuses 30;
- Fig. 4.1: eine perspektivische Ansicht eines ersten Schneckenextruders 100 des Doppelschneckenextruders 10 gemäß Fig. 2;
- Fig. 4.2: eine perspektivische Ansicht eines zweiten Schneckenextruders 200 des Doppelschneckenextruders 10 gemäß Fig. 2;
- Fig. 5: eine Draufsicht des Doppelschneckenextruders 10 gemäß Fig. 2; und
- Fig. 6: eine Schnittansicht des Doppelschneckenextruders 10 gemäß Fig. 5.

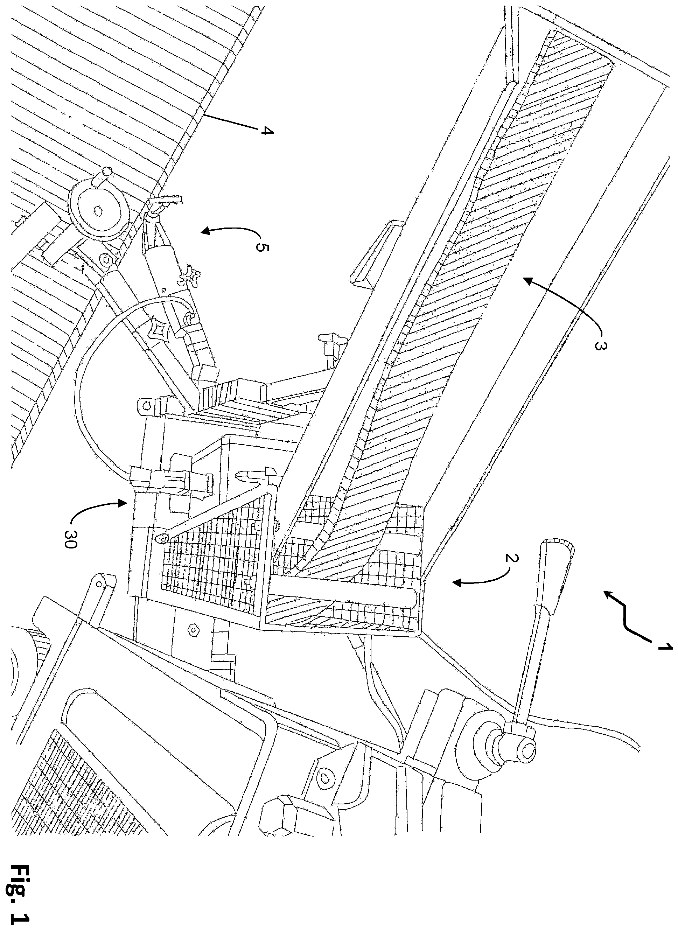

Fig. 1 zeigt eine mobile Vorrichtung 1 in einer perspektivischen Draufsicht. Die Vorrichtung 1 umfasst mindestens eine Zugabeeinheit 2, ein Extrudergehäuse 30 mit einem nicht näher bezeichneten und gezeigten Doppelschneckenextruder 10 und eine Austrageeinheit 5. Des Weiteren ist in der Zugabeeinheit 2 ein zu verarbeitendes und bandförmiges bitumenhaltiges Material 3 angeordnet. Das zu verarbeitende bitumenhaltige Material 3 wird über die Zugabeeinheit 2 in das Extrudergehäuse 30 geführt und anschließend aus der Austrageeinheit 5 als verarbeitetes bitumenhaltiges Material ausgegeben und auf eine Nahtflanke 4 aufgebracht.

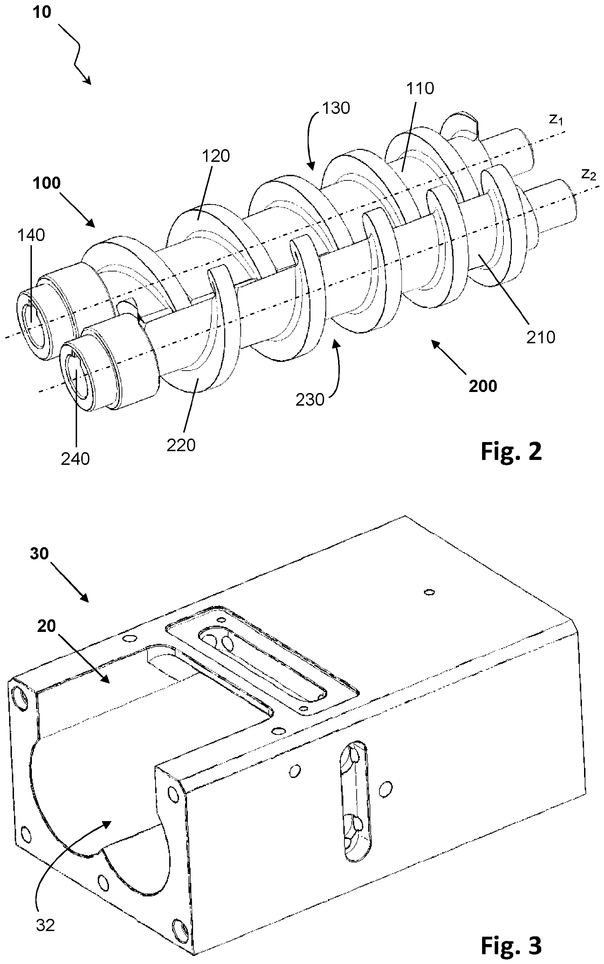

Fig. 2 zeigt einen Doppelschneckenextruder 10 in einer perspektivischen Ansicht. Der Doppelschneckenextruder 10 umfasst einen ersten Schneckenextruder 100 und einen zweiten Schneckenextruder 200 mit parallel zu einander verlaufenden Extruderachsen z₁, z₂. Der erste Schneckenextruder 100 umfasst eine erste Welle 110 und der zweite Schneckenextruder 200 umfassen eine zweiten Welle 210, wobei der erste Schneckenextruder 100 eine erste Helix 120 auf der ersten Welle 110 aufweist und der zweite Schneckenextruder 200 eine zweite Helix 220 auf der zweiten Welle 210 aufweist. Der erste Schneckenextruder 100 und der zweite Schneckenextruder 200 sind entsprechend nebeneinander angeordnet, so dass die erste Helix 120 und die zweite Helix 220 kämmend ineinandergreifend ausgebildet sind. Weiter weisen der erste Schneckenextruder 100 und der zweite Schneckenextruder 200 jeweils einen Kanal 130, 230 auf, die einen Raum zwischen den jeweiligen Windungen der ersten und der zweiten Helix 120, 220 bilden. Des Weitern weisen der erste Schneckenextruder 100 und der zweite Schneckenextruder 200 an jeweils einem Endbereich eine Antriebsaufnahme 140, 240 auf. Die Antriebsaufnahmen 140, 240 sind mit einer Antriebseinheit (Fig. 2 nicht zu entnehmen) verbunden, die eine rotatorische Bewegung generiert, so dass sich die Schneckenextruder 100, 200 um ihre jeweiligen Extruderachsen z₁, z₂ rotieren. Die Antriebseinheit ist entsprechend mit dem ersten und zweiten Schneckenextruder 100, 200 verbunden, so dass diese eine zueinander entgegenläufige Rotation erfahren.

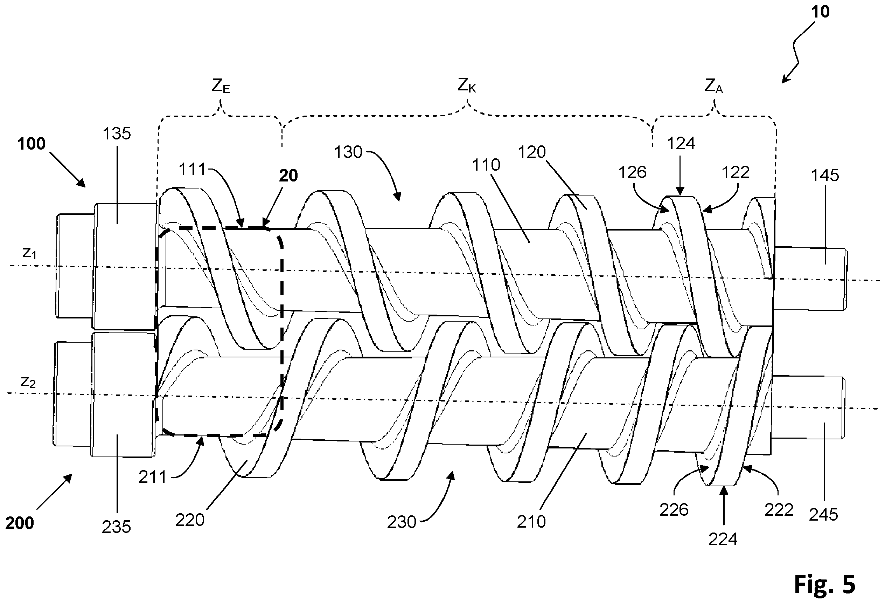

Fig. 3 zeigt einen Teil des Extrudergehäuses 30 in einer perspektivischen Ansicht. Das Extrudergehäuse 30 ist kastenartig ausgebildet. Das Extrudergehäuse 30 weist einen Innenraum 32 auf, in dem der Doppelschneckenextruder 10 (siehe Fig. 2) angeordnet ist. Der Innenraum 32 des Extrudergehäuses 30 weist im Wesentlichen die Form des Doppelschneckenextruders 10 auf, wobei der Doppelschneckenextruder 10 im Innenraum 32 um die Extruderachsen z₁, z₂ (siehe Fig. 2) rotierbar ist. Des Weiteren ist in Fig. 3 ein Zugabebereich 20 (siehe auch Fig. 5) des Doppelschneckenextruders 10 verdeutlicht. In den Zugabebereich 20 ist ein zu verarbeitendes bitumenhaltiges Material zuführbar

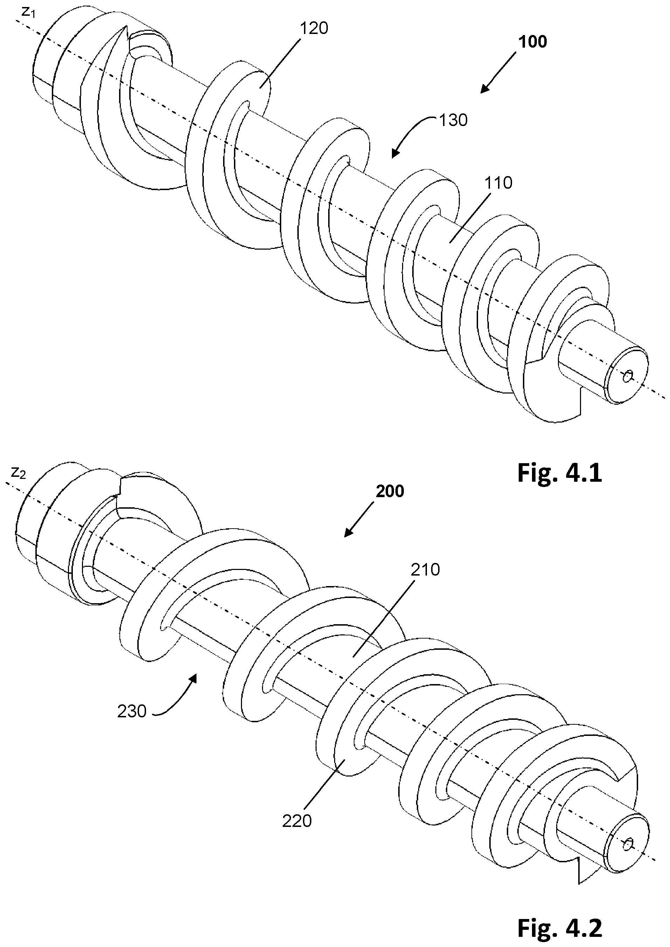

Fig. 4.1 zeigt den ersten Schneckenextruder 100 in einer perspektivischen Ansicht. Der erste Schneckenextruder 100 umfasst die erste Welle 110, auf der die erste Helix 120 angeordnet ist. Die erste Helix 120 windet sich um die erste Welle 110 herum und in Richtung der Extruderachse z₁. Zwischen den einzelnen Windungen der ersten Helix 120 ist der Kanal 130 angeordnet. Weiter ist Fig. 4.1 zu entnehmen, dass die erste Helix 120 des ersten Schneckenextruders 100 als eine rechtsgängige Helix ausgebildet ist. Hierunter ist zu verstehen, dass sich die Windung der ersten Helix 120 im Uhrzeigersinn um die erste Welle 110 herum windet.

Fig. 4.2 zeigt den zweiten Schneckenextruder 200 in einer perspektivischen Ansicht. Der zweite Schneckenextruder 200 umfasst die zweite Welle 210, auf der die zweite Helix 220 angeordnet ist. Die zweite Helix 220 windet sich um die zweite Welle 210 herum und in Richtung der Extruderachse z₂. Zwischen den einzelnen Windungen der zweiten Helix 220 ist der Kanal 230 angeordnet. Weiter ist Fig. 4.2 zu entnehmen, dass die zweite Helix 220 des zweiten Schneckenextruders 200 als eine linksgängige Helix ausgebildet ist. Hierunter ist zu verstehen, dass sich die Windung der zweiten Helix 220 gegen den Uhrzeigersinn um die zweite Welle 210 herum windet.

Fig. 5 zeigt den Doppelschneckenextruder 10 in einer Draufsicht. Der Doppelschneckenextruder 10 umfasst den ersten Schneckenextruder 100 und den zweiten Schneckenextruder 200 mit den parallel zu einander verlaufenden Extruderachsen z₁, z₂. Der erste Schneckenextruder 100 umfasst die erste Welle 110 und der zweite Schneckenextruder 200 umfassen die zweiten Welle 210, wobei der erste Schneckenextruder 100 die erste Helix 120 auf der ersten Welle 110 aufweist und der zweite Schneckenextruder 200 die zweite Helix 220 auf der zweiten Welle 210 aufweist.

Weiter weisen die erste und zweite Helix 120, 220 jeweils eine Treibseite 122, 222, eine Stirnseite 124, 224 und eine Folgeseite 126, 226 auf. Die Treibseiten 112, 222 der Helices sind die Seite der Schneckenextruder 100, 200 die ein zu verarbeitendes bitumenhaltiges Material 3 (siehe Fig. 1) im Extrudergehäuse 30 (siehe Fig. 3) ausgehend von einer Einzugszone Z_{E}, über eine Kompressionszone Z_{K} bis zu einer Ausstoßzone Z_{A} treibt bzw. befördert. Die Folgeseiten 126, 226 der Helices 120, 220 sind die abgewandten Seiten der Treibseiten 122, 222 und sind durch die Stirnseiten 124, 224 der Helices 120, 220 mit den Treibseite 122, 222 verbunden.

Ein zu verarbeitendes bitumenhaltiges Material 3 ist über die Zugabeeinheit 2 (siehe Fig. 1) in den Zugabebereich 20, der durch die Einzugszone Z_{E} des Doppelschneckenextruders 10 gebildet ist, zuführbar. Der Zugabebereich 20 ist von einer ersten Wellenaußenkontur 111 der ersten Welle 110 und einer zweiten Wellenaußenkontur 211 der zweiten Welle 210 in der Einzugszone Z_{E} begrenzt. Die jeweiligen Wellenaußenkonturen 111, 211 sind in dem Bereich der Welle 110, 210 angeordnet, der am weitesten entfernt von der jeweils anderen Welle 110, 210 angeordnet ist. Insbesondere ist die Wellenaußenkontur 111, 211 bei einer Rotation der Wellen 110, 210 kein festgelegter und somit mitrotierender Ort auf den Wellen 110, 210.

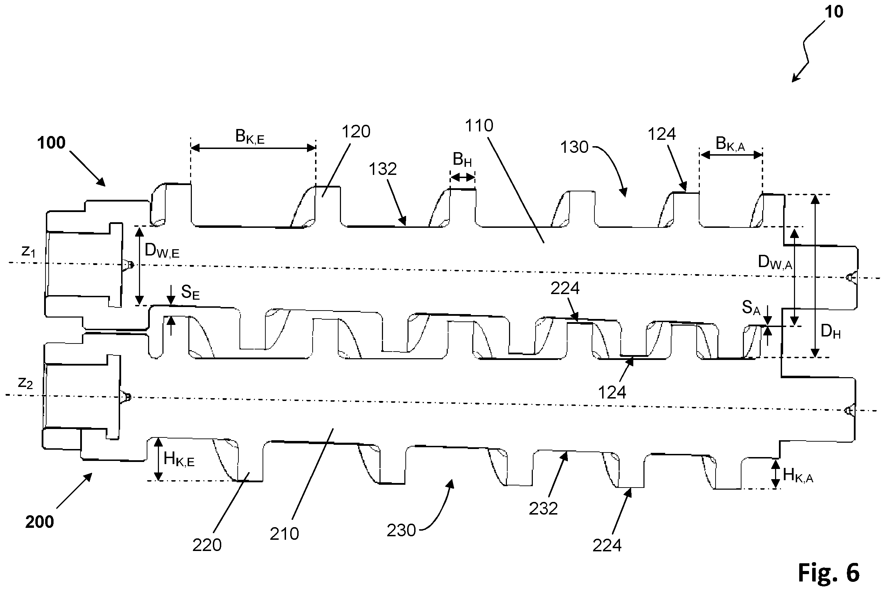

Fig. 6 zeigt den Doppelschneckenextruder 10 in einer Schnittansicht. Der Doppelschneckenextruder 10 umfasst den ersten Schneckenextruder 100 und den zweiten Schneckenextruder 200 mit den parallel zu einander verlaufenden Extruderachsen z₁, z₂. Der erste Schneckenextruder 100 umfasst die erste Welle 110 und der zweite Schneckenextruder 200 umfassen die zweiten Welle 210, wobei der erste Schneckenextruder 100 die erste Helix 120 auf der ersten Welle 110 aufweist und der zweite Schneckenextruder 200 die zweite Helix 220 auf der zweiten Welle 210 aufweist.

Weiter weisen die erste und die zweite Helix 120, 220 jeweils einen Helixdurchmesser D_{H} auf. Der Helixdurchmesser H_{D} erstreckt sich rechtwinklig durch die Extruderachsen z₁, z₂ und von Stirnseite 124, 224 zu Stirnseite 124, 224 einer jeden Helix 120, 220 verlaufend. Der Helixdurchmesser H_{D} ist ein Außendurchmesser der sich windenden Helix (120, 220). Der Helixdurchmesser H_{D} weist ausgehend von der Einzugszone Z_{E}, über die Kompressionszone Z_{K} bis zur Ausstoßzone Z_{A} einen im Wesentlichen gleichbleibenden Durchmesser auf.

An die erste Welle 110 und die zweite Welle 210 angeordnet weisen der erste und zweite Schneckenextruder 100, 200 jeweils einen ersten Lagerkopf 135, 235 und einen zweiten Lagerkopf 145, 245 auf. Die Lagerköpfe 135, 145, 235, 245 bilden Endbereiche der jeweiligen Schneckenextruder 100, 200. Im Bereich der Lagerköpfe 135, 145, 235, 245 weisen die Schneckenextruder 100, 200 keine Helix 120, 220 auf. Die ersten Lagerköpfe 135, 235 stehen in mittelbarem oder unmittelbarem Kontakt mit der Antriebseinheit (Fig. 1 nicht zu entnehmen) und werden über diese angetrieben und gelagert. Die zweiten Lagerköpfe 145, 245 sind mit dem Extrudergehäuse 30 (siehe Fig. 3) verbunden und über dieses gelagert.

Die erste Helix 120 des ersten Schneckenextruders 100 und die zweite Helix 220 des zweiten Schneckenextruders 200 weisen eine im Wesentlichen gleichbleibende Wandstärke bzw. Helixbreite B_{H} auf. Die Helixbreite B_{H} beschreibt eine Windungsdicke der Helix 120, 220, die sich von der Treibseite 122, 222 (siehe Fig. 5) bis zur Folgeseite 126, 226 erstreckt. Die Helixbreite B_{H} ist in etwa so breit wie die Stirnseite 124, 224 der Helix 120, 220 breit ist.

Des Weiteren weisen die Kanäle 130, 230 eine Kanalbreite B_{K,E}, B_{K,A} auf, die sich ausgehend von der Einzugszone Z_{E}, über die Kompressionszone Z_{K} bis zur Ausstoßzone Z_{A} des Doppelschneckenextruders 10 in ihrer Breite verringern. Die Kanalbreite B_{K,E}, B_{K,A}, die sich von der Einzugszone Z_{E} bis zur Ausstoßzone Z_{A} des Doppelschneckenextruders 10 in ihrer Breite verringert, bewirkt bevorzugt eine Abnahme einer Helixsteigung. Die Steigung der Helix 120, 220 ist somit nicht konstant und die Schneckenextruder 100, 200 weisen über deren jeweiligen Helices 120, 220 eine progressive Form auf. Das Verhältnis der Kanalbreite B_{K,E} der Einzugszone Z_{E} zur Kanalbreite B_{K,A} der Ausstoßzone Z_{A} lieg bei etwa 2,1 zu 1,0.

Weiter weisen die Kanäle 130, 230 eine Kanalhöhe H_{K,E}, H_{K,A} auf, die sich von einem Kanalgrund 132, 232 bis zur Höhe der Stirnseite 124, 224 der Helix 120, 220 erstrecken. Die jeweiligen Kanäle 130, 230 nehmen ausgehend von der Einzugszone Z_{E}, über die Kompressionszone Z_{K} bis zur Ausstoßzone Z_{A} in ihrer Kanalhöhe H_{K,E}, H_{K,A} ab. Das Verhältnis der Kanalhöhe H_{K,E} der Einzugszone Z_{E} zur Kanalhöhe H_{K,A} der Ausstoßzone Z_{A} liegt bei etwa 1,26 zu 1,00.

Die erste und zweite Welle 110, 210 der Schneckenextruder 100, 200 weisen einen Wellendurchmesser D_{W,E}, D_{W,A} auf. Die Wellendurchmesser D_{W,E}, D_{W,A} nehmen ausgehend von der Einzugszone Z_{E}, über die Kompressionszone Z_{K} bis zur Ausstoßzone Z_{A} im Wellendurchmesser D_{W,E}, D_{W,A} im Wesentlichen stetig zu. Das Verhältnis des Wellendurchmessers D_{W,E} der Einzugszone Z_{E} zum Wellendurchmesser D_{W,A} der Ausstoßzone Z_{A} liegt bei etwa 1,00 zu 1,26.

Des Weiteren bilden die ineinander kämmenden Schneckenextruder 100, 200 einen Spalt S_{E}, S_{A}. Der Spalt S_{E}, S_{A} ist zwischen der Stirnseite 124, 224 der einen Helix 120, 220 und dem Kanalgrund 132, 232 bzw. einem Wellenumfang der jeweils gegenüberliegenden anderen Welle 110, 210 ausgebildet. Der Spalt S_{E} ist im Bereich der Einzugszone Z_{E} stärker ausgeprägt als der Spalt S_{A} im Bereich der Ausstoßzone Z_{A}. Die Stärke der Ausprägung des Spaltes S_{E}, S_{A} ist abhängig vom Wellendurchmesser D_{W,E}, D_{W,A}. Der Spalt S_{A} im Bereich der Ausstoßzone Z_{A} ist nahezu geschlossen, wodurch die eine Helix 120, 220 am Kanalgrund 132, 232 bzw. am Wellenumfang der jeweils anderen Welle 110, 210 nahezu anliegt. Das Verhältnis des Spaltes S_{E} bzw. der Spaltstärke in der Einzugszone Z_{E} zur Kanalhöhe H_{K,E} in der Einzugszone Z_{E} liegt bei etwa 1,0 zu 4,7.

Die in den Figuren dargestellten Ausführungsformen sind nicht beschränkend auszulegen. Vielmehr können dort beschriebene Merkmale untereinander und mit den zuvor beschriebenen Merkmalen zu weiteren Ausgestaltungen kombiniert werden. So kann die Zugabeeinheit der Vorrichtung in einer Ausführungsform eine Art Trichter aufweisen und in einer alternativen Ausführungsform eine Art Rüttelplatte oder vorzugsweise eine Kombination der beiden Zuführmöglichkeiten. Weiter ist es möglich, dass die Vorrichtung keine Heizeinrichtung zum Erwärmen eines Materials aufweist und die Vorrichtung bereits ohne eine solche Einrichtung die gewünschten Temperaturen zum Plastifizieren, Komprimieren und/oder austreten des Materials aus der Austrageeinheit aufbringt.

Es wurde eine fugenförmige Näht mit einer erfindungsgemäßen mobilen Vorrichtung hergestellt. Die bevorzugte Zusammensetzung des bitumenhaltigen Materials umfasst Bitumen 160/220, pulverförmigen Füllstoff, einen Weichmacher in Form insbesondere eines besonders bevorzugten paraffinischen Mineralöls (Weißöl), anorganischen Faserfüllstoff, Polyethylen, gegebenenfalls Butylkautschuk, Kohlenwasserstoff-Harz, Talkum und Stabilisationsmittel. Eine beispielhafte Zusammensetzung kann der Tabelle 1 entnommen werden, wobei die Mengenangaben bezogen sind auf die Gesamtmenge des bitumenhaltigen Materials.

**Tabelle 1**

| **Bestandteile/Material** | **[Gew.-%]** |
|---|---|
| Bitumen 160/220 | 42,9 |
| pulverförmiger Füllstoff | 35 |
| Weichmacher | 7,5 |
| Anorganischer Faserfüllstoff | 5,5 |
| Talkum | 4,5 |
| Polyethylen | 3,5 |
| Kohlenwasserstoff-Harz | 1 |
| Stabilisationsmittel | 0,1 |

Mit der erfindungsgemäßen mobilen Vorrichtung wie vorstehend beschrieben wird ein bitumenhaltiges Material für fugenförmige Nähte an Teilflächen von Asphaltdeckschichten hergestellt, welches die aus dem Stand der Technik bekannten Gaseinschlüsse im Material nicht aufzeigt und das Material beim Ausbringen aus der Vorrichtung im Wesentlichen keine Pulsation im Massestrom aufweist.

## Patentansprüche

1. Mobile Vorrichtung (1) zum Herstellen fugenförmiger Nähte an Teilflächen von Asphaltdeckschichten durch Plastifizieren und Ausbringen eines bandförmigen bitumenhaltigen Materials (3) entlang einer Nahtflanke (4) einer Teilfläche, mindestens umfassend eine Zugabeeinheit (2), ein Extrudergehäuse (30) und eine dem Extrudergehäuse (30) nachgeordnete Austrageeinheit (5), wobei im Extrudergehäuse (30) ein Doppelschneckenextruder (10) angeordnet ist, der einen ersten Schneckenextruder (100) und einen zweiten Schneckenextruder (200) mit in etwa parallel zu einander verlaufenden Extruderachsen (z₁, z₂), einer ersten Welle (110) und einer zweiten Welle (210) umfasst, wobei der erste Schneckenextruder (100) eine erste Helix (120) auf der ersten Welle (110) aufweist und der zweite Schneckenextruder (200) eine zweite Helix (220) auf der zweiten Welle (210) aufweist, und die erste Helix (120) und die zweite Helix (220) kämmend ineinandergreifend ausgebildet sind, und wobei der erste Schneckenextruder (100) und der zweite Schneckenextruder (200) jeweils einen Kanal (130, 230) aufweisen, die einen Raum zwischen den jeweiligen Windungen der ersten und der zweiten Helix (120, 220) bilden, wobei die Kanäle (130, 230) eine Kanalbreite (B_{K}) aufweisen, die sich ausgehend von einer Einzugszone (Z_{E}), über eine Kompressionszone (Z_{K}) bis zu einer Ausstoßzone (Z_{A}) des Doppelschneckenextruders (10) in ihrer Breite verringern, und die jeweiligen Kanäle (130, 230) in einer Kanalhöhe (H_{K}) ausgehend von der Einzugszone (Z_{E}), über die Kompressionszone (Z_{K}) bis zur Ausstoßzone (Z_{A}) abnehmen, wobei das zu verarbeitende bitumenhaltige Material (3) mindestens Bitumen umfasst und über die Zugabeeinheit (2) in einen Zugabebereich (20), der durch die Einzugszone (Z_{E}) des Doppelschneckenextruders (10) gebildet ist, zuführbar ist.

2. Vorrichtung (1) gemäß Anspruch 1, **dadurch gekennzeichnet, dass** die erste Helix (120) des ersten Schneckenextruders (100) als eine rechtsgängige Helix und die zweite Helix (220) des zweiten Schneckenextruders (200) als eine linksgängige Helix (220) ausgebildet ist.

3. Vorrichtung (1) gemäß einem oder mehreren der vorhergehenden Ansprüche, **dadurch gekennzeichnet, dass** die erste und die zweite Helix (120, 220) jeweils einen Helixdurchmesser (D_{H}) aufweisen, der ausgehend von der Einzugszone (Z_{E}), über die Kompressionszone (Z_{K}) bis zur Ausstoßzone (Z_{A}) einen im Wesentlichen gleichbleibenden Durchmesser aufweist.

4. Vorrichtung (1) gemäß einem oder mehreren der vorhergehenden Ansprüche, **dadurch gekennzeichnet, dass** die erste und zweite Welle (110, 210) jeweils einen Wellendurchmesser (D_{W}) aufweisen, der ausgehend von der Einzugszone (Z_{E}), über die Kompressionszone (Z_{K}) bis zur Ausstoßzone (Z_{A}) in seinem Durchmesser zunimmt.

5. Vorrichtung (1) gemäß einem oder mehreren der vorhergehenden Ansprüche, **dadurch gekennzeichnet, dass** die erste Helix (120) des ersten Schneckenextruders (100) und/oder die zweite Helix (220) des zweiten Schneckenextruders (200) eine im Wesentlichen gleichbleibende Wandstärke (B_{H}) aufweisen.

6. Vorrichtung (1) gemäß einem oder mehreren der vorhergehenden Ansprüche, **dadurch gekennzeichnet, dass** der Zugabebereich (20) von einer ersten Wellenaußenkontur (111) der ersten Welle (110) und einer zweiten Wellenaußenkontur (211) der zweiten Welle (210) in der Einzugszone (Z_{E}) begrenzt ist.

7. Vorrichtung (1) gemäß einem oder mehreren der vorhergehenden Ansprüche, **dadurch gekennzeichnet, dass** die Vorrichtung (1) eine Heizeinrichtung zum Erwärmen eines bitumenhaltigen Materials (3) aufweist.

8. Verwendung einer mobilen Vorrichtung (1) gemäß einem oder mehreren der Ansprüche 1 bis 7 zum Herstellen fugenförmiger Nähte an Teilflächen von Asphaltdeckschichten durch Plastifizieren und Ausbringen eines bandförmigen bitumenhaltigen Materials (3) entlang einer Nahtflanke (4) einer Teilfläche.

9. Verfahren zum Herstellen fugenförmiger Nähte an Teilflächen von Asphaltdeckschichten durch Ausbringen eines bandförmigen bitumenhaltigen Materials (3) entlang einer Nahtflanke (4) einer Teilfläche, mit einer Vorrichtung (1) gemäß einem oder mehreren der Ansprüche 1 bis 7, **dadurch gekennzeichnet, dass**
(i) das zu verarbeitende bitumenhaltige Material (3) über eine Zugabeeinheit (2) in einen Zugabebereich (20), gebildet durch eine Einzugszone (Z_{E}) des Doppelschneckenextruders (10), zugeführt wird,
(ii) das zu verarbeitende bitumenhaltige Material (3) mindestens in einer Zone (Z_{E}, Z_{K}, Z_{A}) des Doppelschneckenextruders (10) plastifiziert wird, und
(iii) das verarbeitete bitumenhaltige Material nach Verlassen einer Ausstoßzone (Z_{A}) des Doppelschneckenextruders (10) über eine Austrageeinheit (5) in Strangform ausgepresst und an die Nahtflanke (4) angedrückt wird.

10. Verfahren gemäß Anspruch 9, **dadurch gekennzeichnet, dass** zusätzlich zur mechanischen Wärmeeinwirkung das bitumenhaltige Material (3) einer weiteren thermischen Einwirkung ausgesetzt wird.

## Claims

1. Mobile device (1) for producing joint-shaped seams on partial areas of asphalt cover layers by plasticising and applying a strip-shaped bitumen-containing material (3) along a seam flank (4) of a partial area, at least comprising a feed unit (2), an extruder housing (30) and a discharge unit (5) arranged downstream of the extruder housing (30), wherein a twin-screw extruder (10) is arranged in the extruder housing (30) and comprises a first screw extruder (100) and a second screw extruder (200) with extruder axes (z1, z2) extending approximately parallel to one another, a first shaft (110) and a second shaft (210), wherein the first screw extruder (100) has a first helix (120) on the first shaft (110) and the second screw extruder (200) has a second helix (220) on the second shaft (210), and the first helix (120) and the second helix (220) are formed to mesh with each other, and wherein the first screw extruder (100) and the second screw extruder (200) each have a channel (130, 230) forming a space between the respective turns of the first and second helixes (120, 220), wherein the channels (130, 230) have a channel width (B_{K}) which decreases in width from an intake zone (Z_{E}), via a compression zone (Z_{K}), to a discharge zone (Z_{A}) of the twin-screw extruder (10), and the respective channels (130, 230) decrease at a channel height (H_{K}) from the intake zone (Z_{E}), via the compression zone (Z_{K}), to the discharge zone (Z_{A}), wherein the bitumen-containing material (3) to be processed comprises at least bitumen and can be fed via the feed unit (2) into a feeding area (20) formed by the intake zone (Z_{E}) of the twin screw extruder (10).

2. Device (1) according to claim 1, **characterized in that** the first helix (120) of the first screw extruder (100) is designed as a right-hand helix and the second helix (220) of the second screw extruder (200) is designed as a left-hand helix (220).

3. Device (1) according to one or more of the preceding claims, **characterized in that** the first and second helixes (120, 220) each have a helix diameter (D_{H}) which is substantially constant in diameter from the intake zone (Z_{E}), through the compression zone (Z_{K}) to the discharge zone (Z_{A}).

4. Device (1) according to one or more of the preceding claims, **characterized in that** the first and second shafts (110, 210) each have a shaft diameter (Dw) which increases in diameter from the intake zone (Z_{E}), via the compression zone (Z_{K}) to the discharge zone (Z_{A}).

5. Device (1) according to one or more of the preceding claims, **characterized in that** the first helix (120) of the first screw extruder (100) and/or the second helix (220) of the second screw extruder (200) have a substantially constant wall thickness (B_{H}).

6. Device (1) according to one or more of the preceding claims, **characterized in that** the feeding area (20) is limited by a first shaft outer contour (111) of the first shaft (110) and a second shaft outer contour (211) of the second shaft (210) in the intake zone (Z_{E}).

7. Device (1) according to one or more of the preceding claims, **characterized in that** the device (1) comprises a heating device for heating a bitumen-containing material (3).

8. Use of a mobile device (1) according to one or more of claims 1 to 7 for producing joint-shaped seams on partial areas of asphalt cover layers by plasticising and applying a strip-shaped bitumen-containing material (3) along a seam flank (4) of a partial area.

9. Method for producing joint-shaped seams on partial areas of asphalt cover layers by applyingg a strip-shaped bitumen-containing material (3) along a seam flank (4) of a partial area, with a device (1) according to one or more of claims 1 to 7, **characterized in that**
(i) the bitumen-containing material (3) to be processed is fed via a feed unit (2) into a feeding area (20) formed by an intake zone (Z_{E}) of the twin screw extruder (10),
(ii) the bituminous material (3) to be processed is plasticized in at least one zone (Z_{E}, Z_{K}, Z_{A}) of the twin-screw extruder (10), and
(iii) after leaving a discharge zone (Z_{A}) of the twin screw extruder (10), the processed bituminous material is extruded in strand form via a discharge unit (5) and pressed against the seam flank (4).

10. Method according to claim 9, **characterized in that** in addition to the mechanical heat effect, the bitumen-containing material (3) is exposed to a further thermal effect.

## Revendications

1. Dispositif mobile (1) permettant de produire des jonctions en forme de joints sur des surfaces partielles des couches de roulement asphaltées par plastification et dépôt d'un matériau bitumineux (3) en forme de bande le long d'un flanc de jonction (4) d'une surface partielle, comprenant au moins une unité d'apport (2), un boîtier d'extrudeuse (30) et une unité de déchargement (5) située en aval du boîtier d'extrudeuse (30), dans le boîtier d'extrudeuse (30) étant disposée une double extrudeuse à vis sans fin (10) qui comprend une première extrudeuse à vis sans fin (100) et une deuxième extrudeuse à vis sans fin (200) avec des axes d'extrudeuse (z₁, z₂) sensiblement parallèles entre eux, un premier arbre (110) et un deuxième arbre (210), la première extrudeuse à vis sans fin (100) possédant une première hélice (120) sur le premier arbre (110) et la deuxième extrudeuse à vis sans fin (200) possédant une deuxième hélice (220) sur le deuxième arbre (210), la première hélice (120) et la deuxième hélice (220) s'engrenant l'une dans l'autre, et la première extrudeuse à vis sans fin (100) et la deuxième extrudeuse à vis sans fin (200) possédant chacune un canal (130, 230), lesquels canaux forment un espace entre les enroulements respectifs de la première et de la deuxième hélice (120, 220), ces canaux (130, 230) présentant une largeur de canal (B_{K}) qui se réduit depuis une zone d'entrée (Z_{E}), en passant par une zone de compression (Z_{K}), jusqu'à une zone d'expulsion (Z_{A}) de la double extrudeuse à vis sans fin (10) et ces canaux (130, 230) présentant une hauteur de canal (H_{K}) qui diminue réduit depuis la zone d'entrée (Z_{E}), en passant par la zone de compression (Z_{K}), jusqu'à la zone d'expulsion (Z_{A}), le matériau bitumineux (3) à traiter contenant au moins du bitume et pouvant être envoyé par l'unité d'apport (2) dans une région d'apport (20) qui est formée par la zone d'entrée (Z_{E}) de la double extrudeuse à vis sans fin (10).

2. Dispositif (1) selon la revendication 1, **caractérisé en ce que** la première hélice (120) de la première extrudeuse à vis sans fin (100) est configurée comme une hélice à pas à droite et la deuxième hélice (220) de la deuxième extrudeuse à vis sans fin (200) est configurée comme une hélice à pas à gauche (220).

3. Dispositif (1) selon une ou plusieurs des revendications précédentes, **caractérisé en ce que** la première et la deuxième hélice (120, 220) présentent chacune un diamètre d'hélice (D_{H}) qui reste sensiblement constant depuis la zone d'entrée (Z_{E}), en passant par la zone de compression (Z_{K}), jusqu'à la zone d'expulsion (Z_{A}).

4. Dispositif (1) selon une ou plusieurs des revendications précédentes, **caractérisé en ce que** le premier et le deuxième arbre (110, 210) présentent chacun un diamètre d'arbre (Dw) qui augmente depuis la zone d'entrée (Z_{E}), en passant par la zone de compression (Z_{K}), jusqu'à la zone d'expulsion (Z_{A}).

5. Dispositif (1) selon une ou plusieurs des revendications précédentes, **caractérisé en ce que** la première hélice (120) de la première extrudeuse à vis sans fin (100) et/ou la deuxième hélice (220) de la deuxième extrudeuse à vis sans fin (200) présentent une épaisseur de paroi (B_{H}) qui reste sensiblement constante.

6. Dispositif (1) selon une ou plusieurs des revendications précédentes, **caractérisé en ce que** la région d'apport (20) est délimitée par un premier contour extérieur d'arbre (111) du premier arbre (110) et un deuxième contour extérieur d'arbre (211) du deuxième arbre (210) dans la zone d'entrée (Z_{E}).

7. Dispositif (1) selon une ou plusieurs des revendications précédentes, **caractérisé en ce que** le dispositif (1) possède un équipement de chauffage pour chauffer un matériau bitumineux.

8. Utilisation d'un dispositif (1) selon une ou plusieurs des revendications 1 à 7 permettant de produire des jonctions en forme de joints sur des surfaces partielles des couches de roulement asphaltées par plastification et dépôt d'un matériau bitumineux (3) en forme de bande le long d'un flanc de jonction (4) d'une surface partielle.

9. Procédé permettant de produire des jonctions en forme de joints sur des surfaces partielles des couches de roulement asphaltées par dépôt d'un matériau bitumineux (3) en forme de bande le long d'un flanc de jonction (4) d'une surface partielle, avec un dispositif selon une ou plusieurs des revendications 1 à 7, **caractérisé en ce que**
(i) le matériau bitumineux (3) à traiter est envoyé par une unité d'apport (2) dans une région d'apport (20) qui est formée par la zone d'entrée (Z_{E}) de la double extrudeuse à vis sans fin (10),
(ii) le matériau bitumineux (3) à traiter est plastifié au moins dans une zone (Z_{E}, Z_{K}, Z_{A}) de la double extrudeuse à vis sans fin (10) et
(iii) après avoir quitté la zone d'expulsion (Z_{A}) de la double extrudeuse à vis sans fin (10), le matériau bitumineux à traiter est extrudé sous forme de toron par une unité de déchargement (5) et appliqué sur le flanc de jonction (4).

10. Procédé selon la revendication 9, **caractérisé en ce qu'**en plus de l'action de chauffage mécanique, le matériau bitumineux (3) est soumis à une autre action thermique.
